# EUROPÄISCHE PATENTSCHRIFT

(11) **EP 2 769 018 B1**
(45) Veröffentlichungstag und Bekanntmachung des Hinweises auf die Patenterteilung: **15.02.2017**
(21) Anmeldenummer: 12780656.0
(22) Anmeldetag: 19.10.2012
(51) Int. Cl.: E01C 7/18

(54) **VERFAHREN ZUR HERSTELLUNG EINER WENIGSTENS ZWEISCHICHTIGEN ASPHALTKONSTRUKTION**
METHOD FOR PRODUCING AN AT LEAST DUAL-LAYERED ASPHALT STRUCTURE
PROCÉDÉ DE FABRICATION D'UNE CONSTRUCTION D'ASPHALTE CONTENANT AU MOINS DEUX COUCHES

(30) Priorität: 20.10.2011 DE 102011116474
(43) Veröffentlichungstag der Anmeldung: 27.08.2014
(73) Patentinhaber: Jannicke, Bernd, 50769 Köln (DE); Hermann Kirchner Bauunternehmung GmbH, 36251 Bad Hersfeld (DE); Possögel, Wolfgang, 07646 Bollberg (DE); Jannicke, Jan-Caspar, 50769 Köln (DE)
(72) Erfinder: LIPS, Carsten, 99880 Waltershausen (DE); RICHTER, Norwin, 13347 Berlin (DE)
(74) Vertreter: Geskes, Christoph
(86) Internationale Anmeldenummer: PCT/EP2012/004374
(87) Internationale Veröffentlichungsnummer: WO 2013/056840

(56) Entgegenhaltungen:
- EP-A1- 1 069 241
- EP-A1- 1 605 022
- EP-A2- 0 319 702
- DE-A1- 2 112 931
- DE-A1-102004 029 869
- DE-A1-102009 007 301
- DE-A1-102009 015 879

## Beschreibung

Die vorliegende Erfindung betrifft ein Verfahren zur Herstellung einer mindestens zweischichtigen Asphaltkonstruktion mit mindestens einer unteren Schicht und einer oberen Asphaltdeckschicht mittels eines Straßenfertigers mit mindestens zwei hintereinander angeordneten Einbaubohlen oder mittels einer Straßenfertigerkombination aus wenigstens zwei hintereinander angeordneten Straßenfertigern sowie ein insbesondere für das erfindungsgemäße Verfahren einsetzbares Asphaltmischgut, dessen Verwendung und eine hierdurch hergestellte Asphaltkonstruktionsschicht.

Mindestens zweischichtige Asphaltkonstruktionen bestehen aus mindestens einer unteren Schicht und einer oberen Schicht, oftmals aus drei oder vier Schichten. Gemäß ihren Funktionen werden die einzelnen Schichten einer Asphaltkonstruktion insbesondere als Asphalttragschicht, Asphaltbinderschicht, Asphaltzwischenschicht, Asphaltdichtungsschicht oder Asphaltdeckschicht bezeichnet. Allgemeine Informationen für derartige Asphaltkonstruktionen, insbesondere für (Asphalt)Fahrbahndeckschichten, Asphaltzwischenschichten, Asphaltbinderschichten und/oder Asphaltdichtungsschichten aus Asphaltmischgut ergeben sich aus dem Werk "Technische Lieferbedingungen für Asphaltmischgut für den Bau von Verkehrsflächenbefestigungen" (TL Asphalt-StB 07, Fassung 2008).

Alphaltkonstruktionen können grundsätzlich in zwei verschiedenen Einbauverfahren hergestellt werden, welche sich nach dem eingesetzten Asphaltmischgut, nämlich Walzasphalt einerseits und Gussasphalt andererseits, unterscheiden. Walzasphalte können dabei grundsätzlich für sämtliche Asphaltkonstruktionen eingesetzt werden, Gussasphalte werden so gut wie ausschließlich für Fahrbahndeckschichten eingesetzt, und können nicht als Trag-, Binder- beziehungsweise Zwischenschicht eingesetzt werden.

Walzasphalt hat seinen Namen daher, dass er nach Einbau und maximaler Vorverdichtung überwiegend unter Einsatz von schweren Walzen, mit oder ohne Vibration, verdichtet werden muss. Gussasphalt kann hingegen ausgegossen, verteilt und durch ein Einbaugerät (Gussasphaltbohle oder Straßenfertiger) in eine endgültige Lage eingebaut werden. Aufgrund seiner Eigenschaften beim Einbau ist Gussasphalt bereits so beschaffen, das eine Nachverdichtung durch den Einsatz von schweren Walzen nach Erstellung der endgültigen Lage nicht erforderlich ist. Für Walzasphalt wird in den "Zusätzlichen technischen Vertragsbedingungen und Richtlinien für den Bau von Verkehrsflächenbefestigungen aus Asphalt" (ZTV Asphalt-StB 07, Ausgabe 2007, Fassung 2011) ein Verdichtungsgrad von mindestens 97 % gefordert.

Bei Walzasphalt enthält bereits das Mischgut Gesteinskörnungen (Splitt und Sand) für die Ausprägung einer texturierten, splittreichen und damit griffigen Fahrbahnoberfläche, gebildet, durch z.B. eine Fahrbahndeckschicht. Die mangelhafte Verdichtung von Walzasphalt nach dessen Einbau ist Hauptursache für Schäden an Fahrbahndeckschichten. Aufgrund ungünstiger Einbaubedingungen, insbesondere unter widrigen Witterungsbedingungen, erfolgen Einbaufehler, zum Beispiel Minderverdichtungen. Im Regelwerk "Technische Lieferbedingungen für Asphaltmischgut für den Bau von Verkehrsflächenbefestigungen" (TL Asphalt-StB 07, Fassung 2008) werden als übliche Rezepturen für Walzasphaltmischgut in den unterschiedlichen Arten und Sorten, Folgendes genannt und zugelassen (M.-% ist der prozentuale Anteil der Masse des Bestandteiles an der GesamtMasse der Probe oder Mischungen, wobei diese Definition für den Gegenstand der vorliegenden Erfindung gilt, aber für die Bedürfnisse der Definition der Gesamtmasse der Mischung im Sinne des genannten Standes der Technik gemäß TL Asphalt-StB 07 als auch der Mischung des weiter unten angegebenen Ausführungsbeispieles dieser Erfindung eine solche ausschließlich des Bindemittelanteiles verstanden wird):
- Splittgehalt (grobe Gesteinskörnung > 2 mm) zwischen 35 M.-% und 80 M.-%;
- Sandgehalt (Natur- und/oder Brechsand; Körnung > 0,063 mm und ≤ 2 mm) zwischen 20 M.-% und 70 M.%
- Füllergehalt (feine Gesteinskörnung ≤ 0,063 mm) zwischen 2 M.-% und 14 M.-%, so dass sich für die Gesteinskörnungsmischung eine Gesamtmasse von 100 M.-% ergibt; sowie
- Bindemittelgehalt, jeweils als Mindestbindemittelgehalt bezogen auf Mischgutart und Mischgutsorte, B_{min 3,8} (Bₘᵢₙ steht für Mindestbindemittelgehalt, mit 6,8 ist die Masse in M.-% definiert für AC 32 TS, Asphalttragschicht mit 32 mm Größtkorn) und , B_{min 7,4} (Definition des Begriffes wie Vorstehend, für SMA 5 N, Splittmastixasphaltdeckschicht für normale Beanspruchung, mit 5 mm Größtkorn).

Im Regelwerk "Technische Lieferbedingungen für Asphaltmischgut für den Bau von Verkehrsflächenbefestigungen" (TL Asphalt-StB 07, Fassung 2008) wird als übliche Rezeptur für Gussasphaltmischgut Folgendes genannt und zugelassen (M.-% ist dabei definiert wie weiter oben für Walzasphaltmischgut angegeben):
Splittgehalt (grobe Gesteinskörnung > 2 mm) zwischen 35 M.-% und 55 M.-%;
   - Sandgehalt (Natur- und/oder Brechsand; Körnung > 0,063 mm und ≤ 2 mm) zwischen 25 M.-% und 45 M.%
   - Füllergehalt (feine Gesteinskörnung ≤ 0,063 mm) zwischen 20 M.-% und 32 M.-%, so dass sich für die Gesteinskörnungsmischung eine Gesamtmasse von 100 M.-% ergibt; sowie
   - Bindemittelgehalt, jeweils als Mindestbindemittelgehalt bezogen auf Mischgutart und Mischgutsorte, B_{min 6,8} (Bₘᵢₙ steht für Mindestbindemittelgehalt, mit 6,8 ist die Masse in M.-% definiert, für MA 11 S, Gussasphalt für besondere Beanspruchung mit 11 mm Größtkorn) und B_{min 7,5} (Definition des Begriffes wie Vorstehend, für MA 5 N, Gussasphalt für normale Beanspruchung, mit 5 mm Größtkorn).

Füller, feine Gesteinskörnungen (Sand) und grobe Gesteinskörnungen (Splitt) sind in dem Werk "Technische Lieferbedingungen für Gesteinskörnungen im Straßenbauamt" (TL Gestein-StB 04, Fassung 2007) definiert, welches allgemeine Klassifizierungen für Körnungen von Gestein bis hin zu Gesteinsmehl nennt. In diesem Werk findet sich auch die Bezeichnungsweise für die unterschiedlichen Gesteinsklassen (beispielsweise 0/8 bedeutet ein Größtkorn von 8 mm).

Ein Gussasphaltmischgut ist so zusammengesetzt, dass es beim Einbau gieß- und streichbar ist. Aufgrund seiner guten Einbau- und Fließeigenschaften würde eine Fahrbahndeckschicht aus Gussasphaltmischgut ohne weitere Bearbeitung eine geschlossene, glatte Oberfläche aufweisen. Diese wäre zum Befahren aufgrund fehlender Griffigkeit jedoch wenig geeignet. Als Fahrbahndeckschicht muss diese daher zusätzlich mit Split versehen werden. Zur Erhöhung der Rauhigkeit der Oberfläche und der Griffigkeit erfolgt beim üblichen Gussasphalt also regelmäßig ein Abstreuen mit Splitt oder Sand, der in die Oberfläche eingearbeitet werden muss. Das Applizieren von Abstreusplitt setzt die Arbeitsschritte Erhitzen, Umhüllen mit Bitumen, Transport und Lagern auf der Baustelle, Aufstreuen einer definierten Menge und (12 - 15 kg/qm), Einkneten mit einer Gummiradwalze, Nachwalzen mit einer Glattmantelwalze, Abkehren, Aufnehmen und Abtransportieren des überschüssigen Abstreusplitts voraus. Aus dieser Verfahrensweise resultieren auch Risiken für die Griffigkeit, Lärmentwicklung und Fahrkomfort. Hat das Gussasphaltmischgut zu viel Mörtel an der Oberfläche, dann versinkt der Abstreusplitt in der Fahrbahndeckschicht. Bei zu wenig Mörtel an der Oberfläche haftet der nachträglich aufgebrachte Abstreusplitt nicht. Gegebenenfalls ergeben sich aufgrund unterschiedlicher Einbaudicken und zu niedriger Einbautemperaturen oder auch durch einen ungünstigen Walzeneinsatz zu raue Oberflächen.

Asphaltkonstruktionen bestehen mindestens aus zwei Schichten, üblicherweise aus einer Asphalttragschicht, Asphaltbinderschicht und Asphaltdeckschicht. Problematisch bei der Anwendung von Walzasphalt hierfür ist, dass gerade bei ungünstigen Witterungsbedingungen eine ausreichende Verdichtung nicht mehr erzielbar ist, wie diese durch die "Zusätzlichen technischen Vertragsbedingungen und Richtlinien für den Bau von Verkehrsflächenbefestigungen aus Asphalt" (ZTV Asphalt-StB 07, Ausgabe 2007, Fassung 2011) gefordert ist. Ein Arbeiten bei Umgehungstemperaturen < 5 °C ist nicht möglich. Insbesondere ist bei einer Asphalttragschicht, Einbaudicke je Lage bis max. 16 cm und/oder einer Asphaltbinderschicht, Einbaudicke bis ca. 8.5 cm, aufgrund derer größeren Dicke es bereits unter üblichen Arbeitbedingungen schwierig, die geforderte Verdichtung von > 97 % zu erreichen. Dies hat seine Ursache darin, dass das hier verwendete grobkörnige Mischgut mit größten Größtkorn von 8 mm oder 11 mm zu Entmischungen neigt, d. h. in Randbereichen findet sich vermehrt grobes Korn und im Einbauzentrum vermehrt feinkörniges Mischgut. Bei kühler Witterung kühlen zudem sowohl die Asphaltbinderschicht als auch die Asphalttragschicht schneller aus, so dass eine hinreichende Nachverdichtung durch Walzen auf den geforderten Verdichtungsgrad nicht mehr erzielbar ist. Die Folge können daher Unebenheiten sein, die durch den Walzeneinsatz erzeugt werden, bzw. solche, die durch eine Nachverdichtung unter Verkehrseinfluss stehen.

Auch bei Einsatz von Gussasphaltmischgut treten Probleme auf. So ist bei Temperaturen von < 3 °C es ebenfalls schwierig, Gussasphaltmischgut zu verbauen, da der Gussasphalt hinter der Gussasphaltbohle bei Einbau so schnell auskühlt, dass die bei Gussasphalt bei der Erstellung von Fahrbahndeckschichten notwendige Applizierung von Abstreusplitt stark erschwert ist, dass dieser nicht mehr eingewalzt werden kann. Würde Gussasphaltmischgut als Asphaltbinderschicht oder Asphalttragschicht eingesetzt werden, träte zudem ein Problem auch bei üblichen Witterungsbedingungen auf, dass die Körnung, insbesondere der Splitt, absinkt, und so die Oberfläche bzw. der obere Teil der Asphalttragschicht bzw. Asphaltbinderschicht zu weich ist, und daher ein Einbau einer oberen Schicht auf diese Schichten (beispielsweise eine Fahrbahndeckschicht auf einer Asphaltbinderschicht oder aber einer Asphaltbinderschicht auf einer Asphalttragschicht) schlicht nicht möglich ist.

Aufgrund dieser bekannten Probleme aus dem Stand der Technik besteht daher Bedarf, ein Verfahren als auch ein Asphaltmischgut zur Verfügung zu stellen, welches die genannten Nachteile nicht aufweist oder mildert.

DE 2 112 931 A offenbart einen Füller für asphalt- und/oder teerenthaltende Massen, insbesondere für den Straßenbau, der ganz oder überwiegend aus Diabas besteht. Dieser Füller soll sich für alle üblichen Straßenbaumischungen eignen.

EP 0 319 702 A2 offenbart einen Belag für Tragschichten und ein Verfahren zur Herstellung eines solchen Belages aus natürlichen und/oder künstlichen Mineralstoffen und einem Bindemittelgemisch aus Bitumen und hydraulischem Bindemittel, wobei, bezogen auf das Tragschichtgemisch, der Gehalt der Bitumen und hydraulischen Bindemittel je 1,0 bis 3,0 Gew.-% beträgt, und der Gehalt der beiden zusammen mindestens 3,0 Gew.-% beträgt und der Gesamtwassergehalt ungefähr dem Wassergehalt entspricht, der die dichteste Lagerung ermöglicht.

DE 10 2009 015 879 A1 offenbart ein Verfahren zur Herstellung bituminöser Trag- oder Deckschichten mit einem Bindemittelgehalt von 2 M-% bis 16 M-%, bevorzugt von 6,0 M-% bis 9,0 M-%. Eine Gussasphalttragdeckschicht wird gemäß dieser Lehre nachträglich mit bitumiertem Splitt in einer Korngröße von 2 bis 5 mm abgestreut.

DE 10 2009 007 301 A1 offenbart ein Gußasphaltgemisch für Fahrbahndeckschichten bestehend aus Splitt, Sand, Füller, Bindemittel sowie ggf. Zusätze und ein Herstellungsverfahren für ein derartiges Gußasphaltgemisch.

Es ist Aufgabe der vorliegenden Erfindung, ein Verfahren als auch ein Asphaltmischgut zur Verfügung zu stellen, mittels welchem eine Asphaltkonstruktion auch bei schlechten Witterungsbedingungen mit ausreichender Verdichtung schnell und kostengünstig hergestellt werden kann.

Diese Aufgabe wird erfindungsgemäß gelöst durch ein Verfahren der eingangs genannten Art, wobei der Einbau der mindestens einen unteren Schicht und/oder oberen Schicht mit einer Vorverdichtung und ohne eine Nachverdichtung durch Walzen erfolgt, wobei für die mindestens eine untere Schicht ein Asphaltmischgut eingesetzt wird, umfassend Split, Sand, Füller und Bindemittel, mit einem Splittgehalt mit einer Gesteinskörnung > 2 mm zwischen etwa 55 M.-% und etwa 80 M.-%, einem Sandgehalt an Natur- und/oder Brechsand mit einer Körnung > 0,063 mm und ≤ 2 mm zwischen etwa 6 M.-% und etwa 20 M.-%, einem Füllergehalt mit einer Gesteinskörnung ≤ 0,063 mm zwischen etwa 12 M.-% und etwa 23 M.-% und einem Bindemittelgehalt in einem Bereich zwischen etwa 4,5 M.-% und etwa 6,7 M.-%, wobei die Gesamtmasse des Asphaltmischgutes, einschließlich etwaiger weiterer Zusätze, 100 M.-% beträgt, und wobei das Asphaltmischgut für die mindestens eine untere Schicht ein Größtkorn bis etwa 32 mm aufweist und wobei der Füller überwiegend oder ausschließlich aus Kalkstein ist.

Der eingesetzte Splitt kann in Sinne der vorliegenden Erfindung ebenso wie der eingesetzte Sand auch aus Substituten bestehen, beispielsweise aus Gummigranulat, gewonnen aus aufbereiteten Autoreifen. Soweit in der vorliegenden Erfindung von Gesteinskörnungen gesprochen wird, fallen daher im Sinne der vorliegenden Erfindung darunter auch Substitute wie Gummigranulat mit entsprechenden Körnungen. Auch können sich die Körnungsbereiche von Splitt und Sand erfindungsgemäß überschneiden, beispielsweise kann der erfindungsgemäß eingesetzte Splitt auch ein Anteil Gesteinskörnung in einem Bereich > 1 mm und ≤ 3 mm aufweisen. Dies ist allein schon aufgrund der auf dem Markt angebotenen Splitte nicht zu vermeiden, da diese oftmals auch Gesteinskörnungen ≤ 2 mm aufweisen. Der Anteil von Splitten mit Gesteinskörnungen in einem Bereich von etwa > 1 mm bis etwa ≤ 3 mm beträgt jedoch maximal bis etwa 2 M.-%, weiter bevorzugt liegt in einem Bereich von etwa 0,01 M.-% bis etwa 1 M.-%, wobei dieser Anteil von beanspruchten Splittgehalt gemäß der Asphaltmischung, die im erfindungsgemäßen Verfahren einsetzbar ist, umfasst ist.

Untere Schicht im Sinne der Erfindung kann dabei jede in einer Asphaltkonstruktion vorkommende Schicht sein mit Ausnahme der Fahrbahndeckschicht. Obere Schicht im Sinne der Erfindung können sämtliche in einer Asphaltkonstruktion vorkommende Schichten sein, einschließlich insbesondere der Fahrbahndeckschicht, jedoch ausschließlich der untersten Schicht einer Asphaltkonstruktion, nämlich der Asphalttragschicht, die auf einer Unterlage, beispielsweise aus verdichtetem sehr grobem Splitt, aufgebracht wird.

Die mit dem erfindungsgemäßen Verfahren herstellbaren Asphaltkonstruktionen sind dabei für Verkehrsflächen jeglicher Art geeignet, nicht nur für die Erstellung von Fahrbahnen, sondern auch beispielsweise Verkehrsflächen in Parkhäusern oder Parkplätzen, auf Flughäfen etc. Soweit dabei der Begriff des Straßenfertigers in der vorliegenden Erfindung benutzt wird, erfolgt hierdurch keine Beschränkung auf das Einsatzgebiet des erfindungsgemäß Verfahrens, da Straßenfertiger auch zur Herstellung sonstiger Verkehrsflächen, welche nicht Straßen sind, im Sinne der vorliegenden Erfindung eingesetzt werden.

Besonders bevorzugt im Sinne des erfindungsgemäßen Verfahrens wird für die mindestens eine untere Schicht und die obere Schicht das vorstehend definierte Asphaltmischgut eingesetzt. Vorteilhafterweise wird für die mindestens eine untere Schicht dabei ein Asphaltmischgut mit einem anderen Größtkorn, vorzugsweise mit einem größeren Größtkorn, eingesetzt als dasjenige, welches für die obere Schicht, insbesondere wenn diese als Fahrbahndeckschicht fungiert, eingesetzt wird. Erfindungsgemäß weist das Asphaltmischgut für die mindestens eine untere Schicht ein Größtkorn von bis zu etwa 32 mm, vorteilhafterweise in einem Bereich von etwa 5 mm bis etwa 32 mm, weiter bevorzugt in einem Bereich von etwa 16 mm bis etwa 32 mm, noch weiter bevorzugt in einem Bereich von > 16 mm bis etwa 32 mm, und noch weiter bevorzugt in einem Bereich von etwa 18 mm, bevorzugt von etwa 22 mm, bis etwa 32 mm auf. Vorteilhafterweise weist ein für die obere Schicht, insbesondere eine Fahrbahndeckschicht, eingesetztes Asphaltmischgut, welches im erfindungsgemäßen Verfahren eingesetzt wird, ein Größtkorn in einem Bereich von etwa 2 mm bis etwa 16 mm, weiter bevorzugt etwa 2 mm bis etwa 15 mm, noch weiter bevorzugt von etwa 2 mm bis etwa 11 mm, noch weiter bevorzugt von etwa 5 mm bis etwa 11 mm, auf. Wird das erfindungsgemäße Verfahren dazu genutzt, in einem Schritt eine zweischichtige Asphaltkonstruktion, bestehend aus einer Asphalttragschicht und einer Asphaltbinderschicht einzusetzen, so können die beiden Schichten auch ein im Wesentlichen gleich großes Größtkorn aufweisen. Besonders bevorzugt werden mit dem erfindungsgemäßen Verfahren genau zweischichtige Asphaltkonstruktionen hergestellt, es ist jedoch auch möglich, drei oder vier oder sonst wie mehrschichtige Asphaltkonstruktionen bei Vorsehung einer entsprechenden Anzahl von Einbaubohlen beziehungsweise von Fertigern herzustellen.

Vorzugsweise liegt der Splittgehalt des im erfindungsgemäß Verfahren eingesetzten Asphaltmischgutes in einem Bereich zwischen etwa 65 M.-% und etwa 79 M.-%, noch weiter bevorzugt in einem Bereich zwischen etwa 68 M.-% und etwa 76 M.-%. Vorzugsweise weist der Sandgehalt eine Körnung in einem Bereich > 0,063 mm und ≤ 1 mm auf. Besonders bevorzugt wird ein Sand verwendet, bei welchem der Anteil einer Gesteinkörnung in einem Bereich von > 1 mm oder < 2 mm in einem Bereich von etwa 0,1 M.-% bis etwa 3 M.-% liegt, wobei der genannte Massenprozentbereich von der Gesamtmenge an Sand im Asphaltmischgut, das im erfindungsgemäßen Verfahren eingesetzt werden kann, umfasst ist. Vorzugsweise liegt der Sandgehalt in einem Bereich zwischen etwa 6 M.-% und etwa 18 M.-%, weiter bevorzugt in einem Bereich von etwa 7 M.-% bis etwa 12 M.-%. Bevorzugt liegt der Füllergehalt in einem Bereich zwischen etwa 15 M.-% und etwa 20 M.-%. Erfindungsgemäß handelt es sich bei dem Füller ganz überwiegend oder ausschließlich um Kalksteinfüller, also Gesteinsmehl aus Kalksandstein. Dies führt zu den gewünschten Mörteleigenschaften des im erfindungsgemäßen Verfahren eingesetzten Asphaltmischgutes. Darüber hinaus ist auch der teilweise Ersatz durch Füller aus anderen Gesteinen oder Ersatzstoffen wie Glas, Metallen, Kunststoffen, Flugaschen, insbesondere mit bestimmten Eigenschaften (z. B. versteifend) möglich.

Vorzugsweise wird der Sandgehalt ganz überwiegend aus Natursand bestehen, gegebenenfalls auch Natursand in Form von Quarzsand. Brechsand, insbesondere aus Überkorn des Füllers und Unterkorn des Splittes sollte bevorzugt nur eine geringe Komponente des Sandanteils bilden. Der Sandgehalt beweist bevorzugt einen Fließkoeffizienten von etwa < 30 auf gemäß DIN EN 933-6, Abschnitt 8, besonders bevorzugt einen Fließkoeffizienten von etwa < 25.

Der Bindemittelgehalt des im erfindungsgemäßen Verfahren eingesetzten Asphaltmischgutes liegt bevorzugt in einem Bereich zwischen etwa 4,5 M.-% und etwa 6,5 M.-%, weiter bevorzugt in einem Bereich von etwa 4,6 M.-% bis etwa 6,2 M.-%, noch weiter bevorzugt in einem Bereich zwischen etwa 4,5 M.-% und etwa 5,92 M.-%.

Das Bindemittel ist vorteilhafterweise ausgewählt aus einer Gruppe umfassend Bitumen und/oder thermoplastische Bindemittel, einschließlich Mischungen dieser, und ist vorzugsweise ein Bitumen für die Herstellung von temperaturabgesenkten Asphalt (siehe Merkblatt für Temperaturabsenkung von Asphalt (M TA), Ausgabe 2006), ein polymermodifiziertes Bitumen gemäß DIN EN 12591 oder ein Straßenbaubitumen.

Das im erfindungsgemäßen Verfahren eingesetzte Asphaltmischgut kann weiterhin sonstige Zusatzstoffe umfassen, insbesondere viskositätsverändernde Bindemittel oder beispielsweise auch dem Zusatz von Anteilen von Naturasphalt. So können beispielsweise viskostitätsverändernde Bindemittel Bitumen zugegeben werden, so dass die Viskosität gesenkt und/oder erhöht und dadurch die Einbautemperatur des Asphaltmischgutes gesenkt werden kann. Insbesondere kann das Asphaltmischgut, gemäß dem erfindungsgemäßen Verfahren, gegebenenfalls unter Einsatz geeigneter Additive, wie vorstehend erwähnt, mit einer unteren Einbautemperatur von etwa 150 °C, bevorzugt etwa 160 °C, und bis zu einer oberen Temperatur in einem Bereich von bis zu etwa 230 °C, bevorzugt bis zu etwa 220 °C, eingebaut werden.

Der Vorteil des erfindungsgemäßen Verfahrens liegt darin, dass aufgrund des Einsatzes eines spezifischen Asphaltmischgutes eine mindestens zweischichtige Asphaltkonstruktion mit einer Straßenfertiger-Kombination oder einem Straßenfertiger mit mindestens zwei hintereinander angeordneten Einbaubohlen ohne die Notwendigkeit einer Applikation von Abstreusplitt (bei Erstellung von Fahrbahndeckschichten) und ohne eine Nachverdichtung durch Walzen herstellbar ist. Damit fallen die Nachteile beim Einsatz von Walzasphalt einerseits aufgrund der Probleme der Erzielung der notwendigen Verdichtung von > 97 % insbesondere bei der Herstellung von Asphaltbinderschichten und Asphalttragschichten weg als auch diejenigen Probleme, welche sich bei der Verwendung von Gussasphalt für derartige Schichten stellen würden und für Fahrbahndeckschichten sich stellen. Zudem ist das Asphaltmischgut, welches im erfindungsgemäßen Verfahren eingesetzt wird, aufgrund des geringen Bindemittelgehaltes kostengünstig.

Das Asphaltmischgut gemäß dem erfindungsgemäßen Verfahren weist einerseits Eigenschaften eines Walzasphaltes auf, andererseits solche eines Gussasphaltes, und stellt damit eine vollkommen neue Klasse eines Asphaltmischgutes dar. Es weist selbstverdichtende Eigenschaften auf, d.h. eine Nachverdichtung entfällt. Es ist aus sich selbst heraus aufgrund des hohen Mörtelgehaltes (als Mörtel bezeichnet man eine Mischung aus Bindemittel, Füller und Sand) bei gleichzeitig geringerem Bindemittelgehalt und Einsatz eines hohen Splittgehaltes, insbesondere mit großen Körnungen, ohne Nachverdichtung verdichtbar mindestens auf die erforderlichen 97 %. Dabei kann es zugleich an der Oberfläche offenporig hergestellt werden und sorgt für einen ausreichenden Wasserabfluss, andererseits weist es bei Einsatz als Fahrbahndeckschicht auch die notwendige Griffigkeit auf aufgrund des hohen Splittgehaltes, so dass ein Abstreuen entfällt. Auch ist aufgrund der hohen Verdichtung eine mindestens zweischichtige Asphaltkonstruktion, hergestellt mit dem erfindungsgemäßen Verfahren, bereits nach kurzer Zeit befahrbar, ohne dass es durch Verkehrsbeanspruchungen zu Verformungen oder Verdrückungen kommt.

Erfindungsgemäß erfolgt der Einbau der mindestens einen unteren Schicht und/oder der oberen Schicht mit einer Vorverdichtung. Die Vorverdichtung kann über die Leistung des jeweils eingesetzten Straßenfertigers eingestellt, und in Abhängigkeit der maximalen möglichen Asphaltfertigerleistung definiert werden. Die maximal erzielbare Vorverdichtungsleistung liegt in einem Bereich von etwa 90 % bis etwa 95 %, bezogen auf eine im Labor ermittelte 100-prozentige Verdichtung. Mit einer derartigen maximalen Vorverdichtung kann auch das erfindungsgemäße Verfahren betrieben werden, es kann jedoch auch vorgesehen sein, dass ausschließlich die erste Verdichtungseinheit (Stampfermesser bzw. Tamper) des jeweils eingesetzten Straßenfertigers nur zu etwa 30 % betrieben wird, um eine porenreiche Oberflächenstruktur zu erzielen, besonders dann, wenn mit dem erfindungsgemäßen Asphaltmischgut eine lärmgeminderte Deckschicht hergestellt werden soll. Im Sinne der vorliegenden Erfindung kann die Vorverdichterleistung damit bevorzugt in einem Bereich von etwa 20 % bis etwa 95 %, weiter bevorzugt in einem Bereich von etwa 30 % bis etwa 93 %, noch weiter bevorzugt in einem Bereich von etwa 80 % bis etwa 93 % der bisher üblichen Verdichtungsenergie, bezogen auf eine im Labor ermittelte 100-prozentige Verdichterleistung, liegen. Die Vorverdichtung kann dabei durch unterschiedlichste Vorverdichtungseinheiten eines Straßenfertigers, beispielsweise durch die Stampfermesser (Tamper), Bohlenvibration und/oder Pressleisteneinsatz, erfolgen, wobei besonders bevorzugt eine ausschließliche Vorverdichtung mittels Stampfermesser (Tamper) ist.

Im Unterschied zu dieser Vorverdichtung erfolgt bei dem erfindungsgemäßen Verfahren keine Nachverdichtung durch Überfahren mit insbesondere schweren Walzen, d. h. Walzen mit einem Gewicht von mehr als 6 t. Allerdings kann zur Strukturierung der Oberfläche, nicht zur Erzielung einer Nachverdichtung, eine Nachbehandlung bei Erstellung einer mindestens zweischichtigen Asphaltkonstruktion, bei welcher eine Schicht eine Fahrbahndeckschicht ist, erfolgen durch nachfolgendes Überwalzen der Fahrbahndeckschicht mit einer leichten Glattmantelwalze, welche besonders bevorzugt ein Gewicht von weniger als 4 t aufweist. Mit dieser Oberflächenstrukturierung erfolgt lediglich eine Ausrichtung der oberflächig liegenden Splittkörner der im erfindungsgemäßen Verfahren eingesetzten Asphaltmischung.

Weiter vorteilhaft an dem erfindungsgemäßen Verfahren ist, dass bei widrigen Witterungseinflüssen, insbesondere bei Temperaturen unter 5 °C, bevorzugt unter 3 °C, die Erstellung von mindestens zweischichtigen Asphaltkonstruktionen ermöglicht ist. Unmittelbar hinter einer Einbaubohle des eingesetzten Straßenfertigers oder Straßenfertigerkombination hat die hergestellte mindestens zweischichtige Asphaltkonstruktion betreffend zumindest die untere Schicht, bei Einsatz des für die untere Schicht verwendeten Asphaltmischgutes auch für die obere Schicht, bereits eine Endverdichtung erreicht. Daher ist ein Einsatz des erfindungsgemäßen Verfahrens auch bei Minustemperaturen ermöglicht.

Im Übrigen kann mit dem erfindungsgemäßen Verfahren bei Herstellung mindestens zweischichtiger Asphaltkonstruktionen mit einer Fahrbahndeckschicht als oberer Schicht und einer unteren Schicht, beispielsweise einer Asphaltbinderschicht, die Dicke der Asphaltdeckschicht aufgrund der Ebenflächigkeit der hergestellten mindestens zwei Schichten auf von bis zu etwa 1,8 cm, weiter bevorzugt von bis zu etwa 1,5 cm, reduziert werden. Eine derartige Reduzierung der Dicke von Fahrbahndeckschichten wäre bei Einsatz von Walzasphalt als Asphaltbinderschicht nicht möglich aufgrund der nicht vorhandenen Ebenflächigkeit derselben. Hieran wird verdeutlicht, dass das im erfindungsgemäßen Verfahren eingesetzte neuartige Asphaltmischgut einerseits Eigenschaften von Walzasphalt aufweist, andererseits solche von Gussasphalt, und diese vorteilhaft miteinander kombiniert.

In einer besonders bevorzugten Ausführungsform des erfindungsgemäßen Verfahrens wird die mindestens eine untere Schicht auf eine Unterlage aufgebracht, wobei die Oberflächentemperatur der Unterlage bis zu etwa 50 °C, bevorzugt bis zu etwa 30 °C bei Aufbringung der mindestens einen unteren Schicht beträgt. Die Unterlage kann, wie bereits vorstehend ausgeführt, vorzugsweise aus überwalztem grobkörnigen Splitt oder Ähnlichem bestehen. Insbesondere kann die Unterlage eine Temperatur entsprechend der Umgebungstemperatur aufweisen. Das erfindungsgemäße Verfahren weist den großen Vorteil auf, dass eine Vorwärmung der Unterlage nicht notwendig ist, was durchaus üblich bei Einsatz von Gussasphaltmischgut ist. Insofern schlagen die Gussasphaltmischguteigenschaften der neuartigen Asphaltmischung, die im erfindungsgemäßen Verfahren eingesetzt wird, nicht nachteilige auf dieses ein. Besonders bevorzugt beträgt die Oberflächentemperatur der mindestens einen unteren Schicht mindestens etwa 100 °C, weiter bevorzugt mindestens etwa 120 °C bei Aufbringung der oberen Schicht, wobei die obere Schicht insbesondere eine Fahrbahndeckschicht ist. Besonders bevorzugt liegt die Oberflächentemperatur der mindestens einen unteren Schicht, die unterhalb der oberen Schicht angeordnet ist, in einem Bereich von etwa 100 °C bis etwa 180 °C, weiter bevorzugt in einem Bereich von etwa 120 °C bis etwa 150 °C.

Besonders bevorzugt wird die untere oder obere Schicht, eingebaut auf einer (weiteren) unteren Schicht, etwa 10 s bis etwa 2 min, weiter bevorzugt etwa 20 s bis etwa 180 s, nach der mindestens einen unteren Schicht eingebaut. Aufgrund des Wegfalls von Nachverdichtungen als auch des Applizierens von Streusplitt und der bis zu 100 % betragenden Verdichtung der erzeugten mindestens einen unteren Schicht oder oberen Schicht ist mit dem erfindungsgemäßen Verfahren eine ausgesprochen schnelle und damit auch kostengünstige Herstellung mindestens zweischichtiger Asphaltkonstruktionen ermöglicht.

Soweit mittels des erfindungsgemäßen Verfahrens eine mindestens zweischichtige Asphaltkonstruktion unmittelbar auf einer Unterlage erstellt wird, wobei der Begriff Unterlage auch den Fahrbahnunterbau umfasst, kann die Unterlage auch feucht sein, was bei Erzeugung von Asphaltschichten aus Walzasphalt bzw. Gussasphalt so nicht möglich ist. Des Weiteren kann bei Herstellung der mindestens zweischichtigen Asphaltkonstruktion auf eine Unterlage die Unterlage auch mit einem Haftkleber oder mit einer Bitumenemulsion angespritzt sein zwecks besserer Verklebung der unteren Schicht, die unmittelbar benachbart der Unterlage ist.

Beschrieben wird weiterhin ein Asphaltmischgut, wie dieses weiter oben im Zusammenhang mit dem erfindungsgemäßen Verfahren erwähnt ist, als auch die Verwendung dieses Asphaltmischgutes zur Herstellung einer Asphaltkonstruktionsschicht, insbesondere eine Asphalttragschicht, Asphaltbinderschicht, Asphaltzwischenschicht, Asphaltdichtungsschicht oder eine Asphaltdeckschicht. Darüber hinaus wird auch eine Asphaltkonstruktionsschicht, insbesondere Asphalttragschicht, Asphaltbinderschicht, Asphaltzwischenschicht, Asphaltdichtungsschicht oder eine Asphaltdeckschicht, hergestellt aus dem Asphaltmischgut, und ein Verfahren zur Herstellung einer solchen Asphaltkonstruktionsschicht unter Einsatz des Asphaltmischgutes beschrieben. Dabei kann zur Herstellung einer solchen (auch einlagigen) Asphaltkonstruktionsschicht das Asphaltmischgut mit einer Temperatur in einem Bereich von etwa 150 °C bis 230 °C verbaut werden, und zwar besonders bevorzugt mit einem Straßenfertiger und ansonsten unter Verfahrensparametern und mit Verfahrensmitteln, wie diese vorstehend in Hinblick auf das erfindungsgemäße Verfahren zur Herstellung einer mindestens zweischichtigen Asphaltkonstruktion beschrieben sind.

Beispielhaft kann das Asphaltmischgut, welches in den erfindungsgemäßen Verfahren als lärmmindernde Asphaltdeckschicht eingesetzt werden kann, wie folgt zusammengesetzt sein:
- 18,0 M.-% Kalksteinfüller ≤ 0,063 mm;
- 10,0 M.-% Natursand > 0.063 mm, ≤ 2 mm, Fließkoeffizient 28;
- 72,0 M.-% Splitt (Basanit), PSV 52, > 16mm, ≤ 32 mm; Rohdichte des resultierenden Gesteinskörnungsgemisches 2,846 g/cm³ Rohdichte des Asphaltmischgutes 2,546 g/cm³
- 6,0 M.-% (bezogen auf die 100 M.-% des Gesteinskörnungsgemisches aus Füller, Sand und Splitt) Bitumen für die Herstellung von temperaturabgesenktem Asphalt, Sübit VR 35 (EP RuK = 88,0 °C), Hersteller/Händler: GKG MINERALOEL HANDEL GmbH & Co. KG Stuttgart, Liebknechtstr. 50, 70565 Stuttgart (Deutschland)

Die vorstehend angeführten Bestandteile des Asphaltmischgutes wurden in einer Mischanlage bei einer Temperatur in einem Bereich von etwa 150 °C bis etwa 190 °C gemischt. Das Asphaltmischgut wurde nachfolgend mittels eines Straßenfertigers mit einer maximalen Vorverdichtung durch ausschließlichen Einsatz der Stampfermesser (Tamper) mit nahezu 100% der Verdichtungsleistung des Fertigers, bei einer Einbautemperatur von etwa 180 °C nach Mischen und Transport des Asphaltmischgutes als Asphalttragschicht und Asphaltbinderschicht mit einem Straßenfertiger mit zwei hintereinander angeordneten Einbaubohlen verbaut.

Darüber hinaus wurde mit einem Straßenfertiger mit zwei hintereinander angeordneten Einbaubohlen eine Asphaltbinderschicht als untere Schicht mit darauf angeordneter Asphaltdeckschicht als obere Schicht hergestellt, wobei für die Asphaltbinderschicht die Zusammensetzung wie vorstehend beschrieben betreffend das Asphaltmischgut verwendet wurde, für die Asphaltdeckschicht wurde ebenfalls diese Zusammensetzung verwendet, jedoch wies der Splitt eine Gesteinskörnung von > 2 mm bis ≤ 5 mm auf. Ansonsten blieben die Verfahrensparameter für die Asphaltbinderschicht unverändert, das Asphaltmischgut für die Deckschicht wurde im Unterschied zu der Asphaltbinderschicht mittels eines Straßenfertigers mit einer Vorverdichtung durch ausschließlichen Einsatz der Stampfermesser (Tamper) mit 30% der Verdichtungsleistung des Fertigers verdichtet. Die solchermaßen erzeugte Oberflächentextur der Fahrbahndeckschicht hat eine solch günstige Gestalt, dass eine erhebliche Lärmminderung gegenüber dem bekannten Gussasphaltmischgut und auch gegenüber bisher als lärmarm eingestuften Asphaltdeckschichten, z. B. Splittmastixasphalt, gegeben ist. Die ebene Oberfläche mit dort relativ flachliegenden Splittkörnern reduziert das Abrollgeräusch von Fahrzeugen. An der Oberfläche entsteht ein günstiger Porenraum, wobei hier mit einer leichten Glattmantelwalze mit einer Gummioberfläche mit einem Gewicht von etwa 3 t nachfolgend dem Aufbringen der Fahrbahndeckschicht eine Oberflächentexturierung erfolgte. Hierdurch wird auch eine Drainage bei Nässe begünstigt.

Im Übrigen konnten durch Wegfall der Nachverdichtung und der Applikation von Abstreusplitt als auch der Senkung des Bindemittelanteiles die genannten Asphaltkonstruktionen erheblich kostengünstiger und schneller hergestellt werden, als dies mit dem aus dem Stand der Technik bekannten Verfahren der Fall war.

## Patentansprüche

1. Verfahren zur Herstellung einer mindestens zweischichtigen Asphaltkonstruktion mit mindestens einer unteren Schicht und einer oberen Asphaltdeckschicht mittels eines Straßenfertigers mit mindestens zwei hintereinander angeordneten Einbaubohlen oder mittels einer Straßenfertiger-Kombination aus mindestens zwei hintereinander angeordneten Straßenfertigern, wobei der Einbau der mindestens einen unteren Schicht mit einer Vorverdichtung und ohne eine Nachverdichtung durch Walzen erfolgt, **dadurch gekennzeichnet, dass** für die mindestens eine untere Schicht ein Asphaltmischgut eingesetzt wird, umfassend Splitt, Sand, Füller und Bindemittel, mit einem Splittgehalt mit einer Gesteinskörnung > 2 mm zwischen 55 M.-% und 80 M.-%, einem Sandgehalt an Natur- und/oder Brechsand mit einer Körnung > 0,063 mm und ≤ 2 mm zwischen 6 M.-% und 20 M.-%, einem Füllergehalt mit einer Gesteinskörnung ≤ 0,063 mm zwischen 12 M.-% und 23 M.-% und einem Bindemittelgehalt in einem Bereich zwischen 4,5 M.-% und 6,7 M.-%, wobei die Gesamtmasse des Asphaltmischgutes, einschließlich etwaiger weiterer Zusätze, 100 M.-% beträgt, und wobei das Asphaltmischgut für die mindestens eine untere Schicht ein Größtkorn bis etwa 32 mm aufweist und wobei der Füller überwiegend oder ausschließlich aus Kalkstein ist.

2. Verfahren gemäß Anspruch 1, **dadurch gekennzeichnet, dass** sowohl die mindestens eine untere Schicht als auch die obere Schicht aus dem in Anspruch 1 definierten Asphaltmischgut hergestellt werden.

3. Verfahren gemäß Anspruch 1, **dadurch gekennzeichnet, dass** bei Herstellung der oberen Schicht als Deckschicht das Asphaltmischgut ein Größtkorn in einem Bereich bis 16 mm aufweist.

4. Verfahren gemäß einem der vorhergehenden Ansprüche, **dadurch gekennzeichnet, dass** das Asphaltmischgut für die mindestens eine untere Schicht ein Größtkorn in einem Bereich von 16 mm bis 32 mm aufweist.

5. Verfahren gemäß einem der vorhergehenden Ansprüche, **dadurch gekennzeichnet, dass** die Oberflächentemperatur der mindestens einen unteren Schicht mindestens 100° C bei Aufbringung der Deckschicht beträgt.

6. Verfahren gemäß einem der vorhergehenden Ansprüche, **dadurch gekennzeichnet, dass** eine weitere untere Schicht oder die obere Schicht etwa 10 sec bis etwa 2 min nach der mindestens einen unteren Schicht eingebaut wird.

7. Verfahren gemäß einem der vorhergehenden Ansprüche, **dadurch gekennzeichnet, dass** für die mindestens eine untere Schicht ein Asphaltmischgut mit einem anderen Größtkorn eingesetzt wird als dasjenige, welches die obere Schicht aufweist.

## Claims

1. Method for producing an at least two-layered asphalt construction comprising at least one lower layer and one upper asphalt cover layer by using a road paver with at least two paving screeds arranged one after another or by using a road paver combination of at least two road pavers arranged one after another, wherein the at least one lower layer is installed with a pre-compaction and without a follow-up compaction by means of rollers, **characterized in that** for the at least one lower layer an asphalt mixture is used comprising stone chippings, sand, a filler and a binding agent, wherein the stone chipping content having a grain size >2 mm lies between 55 M.-% and 80 M.-%, the sand content of natural sand and/or crushed sand having a grain size of >0.063 mm and ≤2 mm lies between 6 M.-% and 20 M.-%, the filler content having aggregate ≤0.063 mm lies between 12 M.-% and 23 M.-%, and the binding agent content lies between 4.5 M.-% and 6.7 M.-%, wherein the total mass of the asphalt mixture, including possible further additives, is 100 M.-%, and wherein the asphalt mixture has a maximum grain size to about 32 mm for the at least one lower layer and wherein the filler is mainly or exclusively made of lime stone.

2. Method according to claim 1, **characterized in that** the at least one lower layer as well as the upper layer are made of the asphalt mixture as defined in claim 1.

3. Method according to claim 1, **characterized in that** in case of producing the upper layer as a cover layer, the asphalt mixture has a maximum grain size ranging up to 16 mm.

4. Method according to one of the preceding claims, **characterized in that** the asphalt mixture for the at least one lower layer has a maximum grain size ranging from 16 mm to 32 mm.

5. Method according to one of the preceding claims, **characterized in that** the surface temperature of the at least one lower layer is at least 100°C upon applying the cover layer.

6. Method according to one of the preceding claims, **characterized in that** one further lower layer or the upper layer are installed about 10 sec to about 2 min after the at least one lower layer.

7. Method according to one of the preceding claims, **characterized in that** for the at least one lower layer, an asphalt mixture is used having a different maximum grain size than that used for the upper layer.

## Revendications

1. Procédé de fabrication d'une construction d'asphalte à au moins deux couches avec au moins une couche inférieure et une couche supérieure de roulement en asphalte au moyen d'un finisseur de route comportant au moins deux tables de pose disposées les unes derrière les autres, ou au moyen d'une combinaison de finisseurs de route comportant au moins deux finisseurs de route disposés les uns derrière les autres, dans lequel la pose de l'au moins une couche inférieure est effectuée par des rouleaux avec un pré-compactage et sans post-compactage, **caractérisé en ce que** un mélange d'asphalte est employé pour l'au moins une couche inférieure, le mélange d'asphalte comprenant du gravier, du sable, de la matière de charge et du liant, avec une teneur en gravier ayant une taille de grains > 2 mm comprise entre 55 %m et 80 %m, une teneur en sable de sable naturel et / ou concassé ayant une taille de grains > 0,063 mm et ≤ 2 mm comprise entre 6 %m et 20 %m, une teneur en matière de charge ayant une taille de grains ≤0.063 mm comprise entre 12 %m et 23 %m, et une teneur en liant dans une plage comprise entre 4,5 %m et 6,7 %m, dans lequel la masse totale du mélange d'asphalte, y compris tout éventuel autre additif, est égale à 100 %m, et dans lequel le mélange d'asphalte pour l'au moins une couche inférieure présente une taille de grains allant jusqu'à environ 32 mm, et dans lequel la matière de charge est prédominante ou exclusivement calcaire.

2. Procédé selon la revendication 1, **caractérisé en ce que** aussi bien l'au moins une couche inférieure que la couche supérieure sont fabriquées à partir du mélange d'asphalte tel que défini dans la revendication 1.

3. Procédé selon la revendication 1, **caractérisé en ce que** lors de la réalisation de la couche supérieure en tant que couche de roulement, le mélange d'asphalte présente une taille de grains dans une plage allant jusqu'à 16 mm.

4. Procédé selon l'une quelconque des revendications précédentes, **caractérisé en ce que** le mélange d'asphalte pour l'au moins une couche inférieure présente une taille de grains dans une plage allant de 16 mm à 32 mm.

5. Procédé selon l'une quelconque des revendications précédentes, **caractérisé en ce que** la température de surface de l'au moins une couche inférieure atteint au moins 100 °C lors de la pose de la couche de roulement.

6. Procédé selon l'une quelconque des revendications précédentes, **caractérisé en ce que** une couche inférieure supplémentaire ou la couche supérieure est posée environ 10 s à environ 2 min après l'au moins une couche inférieure.

7. Procédé selon l'une quelconque des revendications précédentes, **caractérisé en ce que**, pour l'au moins une couche inférieure, un mélange d'asphalte avec une autre taille de grains que celle de la couche supérieure est utilisé.
